**Europäisches Patentamt**

**European Patent Office**

**Office européen des brevets**

(11) Publication number: **0 217 765**
**B1**

(12) **EUROPEAN PATENT SPECIFICATION**

(45) Date of publication of patent specification: **16.08.90**

(51) Int. Cl.⁵: **C 07 F 9/10**

(21) Application number: **86830282.9**

(22) Date of filing: **03.10.86**

(54) Process for the preparation of L-alpha-glycerylphosphorylcholine, L-alpha-glycerylphosphorylethanolamine from crude and/or deoleated lecithins.

(30) Priority: **04.10.85 IT 2236585**

(43) Date of publication of application:
**08.04.87 Bulletin 87/15**

(45) Publication of the grant of the patent:
**16.08.90 Bulletin 90/33**

(84) Designated Contracting States:
**AT BE CH DE ES FR GB GR IT LI LU NL SE**

(56) References cited:
**EP-A-0 186 803**
**GB-A-2 058 792**

(73) Proprietor: **ISTITUTO CHEMIOTERAPICO ITALIANO FINE CHEMICALS S.p.A.**
**Via Emilia, 99**
**I-20075 San Grato, Lodi (Milano) (IT)**

(72) Inventor: **Tronconi, Giovanni**
**Via Emilia, 99**
**I-20075 San Grato, Lodi (Milan) (IT)**

(74) Representative: **Bianchetti, Giuseppe**
**Studio Consulenza Brevettuale Via Rossini, 8**
**I-20122 Milan (IT)**

Courier Press, Leamington Spa, England.

## Description

The present invention refers to a process for the preparation of L-α-glycerylphosphorylcholine and L-α-glycerylphosphorylethanolamine (hereinafter also named, for the sake of shortness, with the abbreviations GPC, GPE, respectively) from crude or deoleated soy and/or egg lecithins.

The processes up to now known, based on the deacylation of the corresponding pure or partially purified phosphatides, such as disclosed in patents US No. 2,864,848 and GB No. 2,058,792 and in H. Brockerhoff: J. Lipid Research Vol. *4*(1), 96 (1963); D. J. Hanahan: Biochemical Preparations *9*, 55 (1962); N. H. Tattrie, C. S. McArthur: Biochemical Preparations, *6*, 16 (1958) which purifies GPC by a complex with cadmium chloride (which is very toxic) followed by elimination of cadmium by high amounts of resins; the process is very complicated, difficult to be performed industrially and brings about lower yields; Okui et al.: Yaka Ugaku Zasshi, *84* (12), 1206—9 (1964); E. Cubero Robles, G. F. M. Roels: Chem. Phys. Lipids *6*, 31—38 (1971), suffer from such disadvantages as to limit the large-scale industrial applicability thereof.

The process object of the invention, in a preferred embodiment thereof, is characterized in that a mixture of GPC+GPE, obtained by deacylation, with an alkali metal alcoholate in $C_1$—$C_4$-lower alcohols such as methanol, ethanol, isopropanol, of crude or acetone-extraction deoleated lecithins, is treated with zinc salts, preferably with the corresponding chlorides or bromides, obtaining a complex having the approximative formula I

$$(n \ GPC + m \ GPE) \ ZnX_2 \qquad (I)$$

wherein:

X is Cl or Br;

n and m are ranging from 0 to 1

and m+n is equal to 1.

The complex of formula I containing limited amounts of impurities is then treated with an organic base such as pyridine, collidine, picoline, lutidine, thereby releasing the mixture (n GPC+m GPE) purified and an insoluble complex of formula II $(ZnX_2)B_2$ wherein X has the above mentioned meanings and B is the organic base.

The obtained mixture (n GPC+m GPE) may be then efficiently separated into the single components by means of elution on strongly basic resins.

Since the salt has been already eliminated from the complex I by precipitation and filtration of the complex II, and a mixture (n GPC+m GPE) having a high purity degree is used, very small amounts of resins are required and the process, as a whole, is very simple and economical. Deacylation of soy lecithins with sodium methylate in methanol is carried out for a time ranging from 2 to 4 hours and with an amount of alcoholate equal to about 1 mole per mole of total phosphatides (phosphatidylcholine-ethanolamine-inositol). After filtration of the residue (which contains glyceryl-phosphorylinositol) the filtrate containing the (n GPC+m GPE) mixture is adjusted to pH≈6 with organic or mineral acids (acetic acid, lactic, HCl, $H_2SO_4$) or by elution on an acidic resin. After concentration of the solution to small volume, the fatty acid esters are separated and removed. $ZnX_2$ (wherein X has the above defined meanings) is then added and the complex of formula I precipitates.

The use of an ethanol or methanol solution of $ZnCl_2$ is particularly preferred. The amount of metal salt will be generally comprised from 3—6 moles per mole of nGFC+mGFE mixture.

The release of the (n GPC+m GPE) mixture is then carried out by treating an aqueous solution of complex I with a suitable amount of a base such as pyridine, collidine, lutidine or picoline, so as to precipitate complex II. The traces of metal salts in solutions may be then removed by elution on resins, obtaining thereby the pure (n GPC+m GPE) mixture, wherein n and m are as above defined. By means of subsequent elution of said mixture on a strong basic resin, separation of pure GPC and GPE is achieved.

For the preparation of pure GPC only, it is more convenient to carry out the alcoholysis on the ethanol extract of the deoleated soy lecithin. In this case, the process is further made easier, in that, for instance, the complex of formula I is directly obtained from the reaction mixture (without eliminating the fatty acid esters) and moreover the formation and the isolation of the complex itself occur in an easier way. The amount of metal salt used is ranging from 1—2 moles per mole of mixture n GPC+m GPE.

The following Examples further illustrate the invention without limiting it in any way.

Example 1

Preparation of deoleated soy lecithin

1 Kg of crude soy lecithin is poured into 3.5 l of acetone cooled to about +5°C, under stirring. The mixture is stirred at +5°C for 30 min; then filtered. The residue is suspended under stirring in 2 l of acetone (about +5°C) then filtered, washing the residue with acetone (1 l), at room temperature. The solid is filtered and dried under vacuum 133 Pa (1 mm Hg) at 35°C. 680 g of deoleated soy lecithin are obtained.

Example 2

Preparation of (n GPC+m GPE) $ZnCl_2$ complex by deacylation of deoleated soy lecithin in methanol

The suspension of deoleated soy lecithin (3.5 kg) in anhydrous methanol (10 l) containing sodium methylate (3.5 mol=189 g) is stirred at room temperature and in an anhydrous medium for about 3 hours. The mixture is filtered and the residue is washed with methanol (2×1 l), the filtrate is then neutralized (pH≈6) with glacial acetic acid (140 ml) and concentrated to small volume (≈3 lt). The (higher) fatty phase is separated, the methanol solution (lower phase) is slowly poured into a 3M zinc chloride solution in methanol (2.1 l). The obtained solution is slowly poured, in anhydrous isopropanol (7 l) under stirring at room temperature. The mixture is filtered under anhydrous atmosphere, the residue is washed with methanol (0.5 l), then with acetone (0.5 l) and dried at 70°C under vacuum 133 Pa (1 mm Hg). 640 g of mixture (n GPC+m GPE) ZnCl$_2$ are obtained:

$Zn\%=16.72\%$   $GFC\%=29.1\%$   $H_2O=2.8\%$
$Cl\%=17.65\%$   $GFE\%=22.3\%$

The values of n and m and consequently the percentage ratios of GPC and GPE depend on the kind of the used raw material. In the tests performed, it has been noticed that n is approximately comprised from 0.45 to 0.65 and m from 0.35 to 0.55.

With the same process, using crude soy lecithin (100 g), methanol (300 ml), sodium methylate (48 mmol), 10 g of mixture (n GPC+m GPE) ZnCl$_2$ having similar composition to that above described, are obtained.

The purity degree of the mixture (n GPC+m GPE) ZnCl$_2$ obtained by the process described in the Example 2 may vary according to the used raw material. A high purity degree (90—95%) may be however always obtained by elimination of zinc chloride (as in Example 6), subsequent elimination of the solvent and new formation of the complex of formula I as described in the Example 2.

## Example 3
Preparation of (n GPC+m GPE) ZnCl$_2$ complex by deacylation of ethanol extract of the deoleated soy lecithin

460 g of deoleated soy lecithin are suspended in absolute ethanol (1.2 l), the suspension is stirred at room temperature for 1 hour, then filtered washing the residue with ethanol (400 ml). The filtrate is collected with the washings, sodium methylate (89 mmol=4.8 g), diatomaceous earth (10 g) are added and the mixture is stirred at room temperature for 2 hours.

After filtration, the filtrate is neutralized (pH≃6) with glacial acetic acid (≃3.6 ml) then a 2.5 M ZnCl$_2$ solution in absolute ethanol (53 ml) is slowly added under stirring. The mixture is filtered under anhydrous atmosphere, the residue is washed with ethanol (100 ml) then with acetone (2×100 ml) and then dried under vacuum 133 Pa (1 mm Hg) at 70°C. 31.2 G of (n GPC+m GPE) ZnCl$_2$ are obtained.

$Zn^{++}=16.5\%$   $GPC\%=50.1\%$
$Cl^-=17.8\%$   $GPE\%=10.1\%$

Working on the ethanol extract from different kinds of deoleated soy lecithin, it has been noticed that n is approximately comprised from 0.75 to 0.85 and m from 0.25 to 0.15.

## Example 4
Preparation of (n GPC+m GPE) ZnCl$_2$ complex by deacylation of soy lecithin in ethanol

The suspension of deoleated soy lecithin (600 g) in anhydrous ethanol (1.8 l), containing sodium methylate (0.6 mol=32.4 g), diatomaceous earth (10 g) is stirred at room temperature for 3 hours. 20 g of decolorating charcoal are added and the mixture is then filtered, washing the residue with ethanol (2×200 ml). The washings are combined with the filtrate, neutralized (pH≃6) with glacial acetic acid, then a 2.5 M zinc chloride solution in ethanol (24 ml) is added. The mixture is filtered in anhydrous atmosphere, the precipitate is washed with ethanol (50 ml), then with acetone (2×50 ml) and finally dried under vacuum 133 Pa (1 mm Hg) at 60°C. 20 G of (n GPC+m GPE) ZnCl$_2$ mixture are obtained. The composition of the mixture is similar to that described in the Example 3.

The methods of the previous Examples may also be applied to the crude egg lecithin; since it is completely soluble also after hydrolysis in methanol or ethanol, it is more conveniently preferred, nevertheless, to operate in concentrated solution according to the method of the following Example.

## Example 5
Preparation of (n GPC+m GPE) ZnCl$_2$ complex by deacylation of crude egg lecithin

A solution of commercial egg lecithin (100 g) in anhydrous methanol (100 ml) containing sodium methylate (0.045 mol=2.42 g) is left to stand at room temperature for about 2 hours. The methanol phase (lower) is separated from the (higher) fatty phase. The methanol solution is neutralized with glacial acetic acid, then it is slowly poured under stirring into a 3 M zinc chloride solution in methanol (110 ml). The obtained solution is added with isopropanol (350 ml) under stirring. The mixture is filtered under anhydrous atmosphere, the residue is washed with methanol (50 ml) and subsequently with acetone (2×50 ml), then it is dried under vacuum 133 Pa (1 mm Hg) at 70°C obtaining 28 g of (n GPC+m GPE) ZnCl$_2$ mixture.

$Zn^{++}=16.1\%$   $GPC\%=52.3\%$
$Cl^-=17.6\%$   $GPE\%=11.2\%$

The values of n and m depend, also in this case, on the used raw material. In the tests carried out on different kinds of lecithins it has been found that the GPC percentages in the mixture are approximately ranging from 52 to 70%, the GPE percentages from 15 to 20%.

## Example 6
Preparation of (n GPC+m GPE) mixture

Pyridine (18 ml) is added dropwise at +5°C, under stirring, to the solution of (n GPC+m GPE) ZnCl$_2$ (31.2 g) (cfr. Example 3) in water (90 ml). The mixture is left to stand for 4 hours, then filtered, washing the residue (ZnCl$_2$ (Py)$_2$) with cold (+5°C) water (2×15 ml). The aqueous sol-

ution is concentrated at reduced pressure, till disappearance of the residual pyridine, then it is filtered and the aqueous solution is first eluted on IR 120 H$^+$ resin (40 ml: h≃10 cm, φ≃2.5 cm) and subsequently on IR 45 OH$^-$ (80 ml: h≃18 cm, φ≃2.5 cm). Water is removed under reduced pressure, obtaining 23.5 g of (n GPC+m GPE) mixture.

GPC%=66.83%  GPE%=13.85%  H$_2$O%=18.1%

Example 7
Preparation of GPC

The aqueous solution of (n GPC+m GPE) mixture of Example 6 (23 g in 50 ml of water) is eluted on IR 401 OH$^-$ resin (115 ml: h≃20 cm, φ≃3 cm). The resin is washed with water (300 ml) and the mixture is then eluted on IR C50H$^+$ (40 ml: h≃18 cm, φ≃2 cm). Water is eliminated under reduced pressure obtaining 16.9 g of GPC (cont. H$_2$O=12.3%). Assay (with HClO$_4$ in acetic acid)=99.6%. By crystallization from ethanol/ethyl ether, a very hygroscopic solid, having the following characteristics, is obtained:

[α]$_D$−2.89° (c=10% in H$_2$O)
P%=12.15% calc. for C$_8$H$_{20}$NO$_6$P
    found P%=12.04%
N%=5.58% calc. for C$_8$H$_{20}$NO$_6$P
    found N%=5.45%
m.p.=132—134°C.

Example 8
Preparation of GPE

After the separation of GPC (cfr. Example 7), IR 401 OH$^-$ resin is washed with a 1% aqueous solution of acetic acid (100 ml) and, thereafter, with a 5% aqueous solution of acetic acid. The solvent is eliminated from the second solution at reduced pressure obtaining 4 g of GPE (H$_2$O%=15.2%). A sample precipitated from water/ethanol and allowed to crystallize showed the analysis:

[α]$_D$=−2.8° (c=6.5%)
m.p.=84—86°C.

Using (n GPC+m GPE) ZnCl$_2$ complexes containing an higher GPE percent and following the procedures of Examples 6, 7, 8, GPE is obviously recovered in larger amount. For instance, from 91 g of mixture (n GPC+m GPE) ZnCl$_2$ (cfr. Example 2) using IR 120 H$^+$, IR 45 OH$^-$ (180 ml), IR 401 OH$^-$ (350 ml), 22.6 g of GPE (H$_2$O=16.1%) are obtained.

Using the process described in the Example 6, from 35 g of complex (n GPC+m GPE) ZnCl$_2$ (cfr. Example 5) 22 g of mixture (n GPC+m GPE) (H$_2$O%=18.2%) are obtained.

GPC%=81.5%    GPE%=16.3%.

**Claims**

1. A process for the preparation of L-α-glyceryl-phosphorylcholine (GPC) and L-α-glycerylphosphorylethanolamine (GPE) comprising:

a) deacylation of crude or deoleated soy or egg lecithin, in methanol or ethanol with an alkali metal alcoholate;

b) complexation of mixture L-α-glycerylphosphorylcholine and L-α-glycerylphosphorylethanolamine with zinc halides, to give complexes approximatively of formula I, insoluble in lower alcohols C$_1$—C$_4$,

(n GPC+m GPE) ZnX$_2$        (I)

wherein:
X is Cl or Br;
n and m are ranging from 0 to 1
and m+n is equal to 1;

c) releasing of the salt ZnX$_2$ from the complex I by treatment of an aqueous solution of I with a base (B) selected from the group comprising pyridine, collidine, lutidine or picoline, thus precipitating an insoluble (ZnX$_2$)B$_2$ complex and obtaining a solution of (n GPC+m GPE);

d) purification and separation of the mixture of glycerylphosphorylcholine and glycerylphosphorylethanolamine by means of ion-exchange resins.

2. A process according to claim 1, characterized in that methanol or ethanol ZnCl$_2$ solutions are used as complexing agents and that the salt is subsequently released by treating aqueous solutions of the complex of formula I with pyridine.

3. A process for the preparation of L-α-glycerylphosphorylcholine and L-α-glycerylphosphorylethanolamine from deoleated soy lecithin, characterized in that soy lecithin or its ethanolic extract are treated in ethanol with sodium methylate or ethylate and that, after filtration and acidification, the mixture of deacylated phospholipids is treated according to steps b), c) and d) of claim 1.

4. A process according to any one of the previous claims, characterized in that crude soy lecithin is used as the starting material.

5. A process according to any one of the previous claims, characterized in that crude egg lecithin is used as the starting material.

6. A process for the purification and separation of the (n GPC+m GPE) mixture according to claim 1, step d) characterized in that pure GPC is obtained by eluting the mixture on a strongly basic ion-exchange resin.

7. A process for the preparation of L-α-glycerylphosphorylethanolamine, characterized in that pure GPE is recovered from the GPC+GPE mixture after separation of the GPC according to claim 6, by elution with a diluted aqueous solution of acetic acid.

8. A process according to claim 6 or 7, characterized in that crude egg lecithin is used as the starting material.

9. A process for the splitting of a (n GPC+m GPE) ZnX$_2$ complex characterized in that organic bases such as pyridine, collidine, lutidine or picoline are used.

## Patentansprüche

1. Verfahren zur Herstellung von L-α-Glycerylphosphorylcholin (GPC) und L-α-Glycerylphosphorylethanolamin (GPE) bei dem man:

a) rohes oder entoleiertes Soya- oder Eilecithin in Methanol oder Ethanol mit einem Alkalimetallalkoholat deacyliert;

b) ein Gemisch aus L-α-Glycerylphosphorylcholin und L-α-Glycerylphosphorylethanolamin mit Zinkhalogeniden komplexiert, um in niederen Alkoholen $C_1$—$C_4$ unlösliche Komplexe von etwa der Formel I zu erhalten,

$$(n\ GPC + m\ GPE)ZnX_2 \qquad (I)$$

wobei

X die Bedeutung Cl oder Br hat;

n und m von 0 bis 1 reichen

und m+n=1 ist;

c) aus dem Komplex I das Salz $ZnX_2$ freisetzt durch Behandlung einer wässrigen Lösung von I mit einer Base (B), ausgewählt aus der Gruppe Pyridin, Collidin, Lutidin oder Picolin, wodurch man einen unlöslichen $(ZnX_2)B_2$-Komplex ausfällt und eine Lösung aus (n GPC+m GPE) erhält;

d) das Gemisch aus Glycerylphosphorylcholin und Glycerylphosphorylethanolamin mit Hilfe von Ionenaustauscherharzen reinigt und abtrennt.

2. Verfahren nach Anspruch 1, dadurch gekennzeichnet, daß man als Komplexierungsmittel Methanol- oder Ethanol-$ZnCl_2$-Lösungen verwendet, und daß man das Salz nachfolgend freisetzt durch Behandlung wässriger Lösungen des Komplexes der Formel I mit Pyridin.

3. Verfahren zur Herstellung von L-α-Glycerylphosphorylholin und L-α-Glycerylphosphorylethanolamin aus deoleiertem Soyalecithin, dadurch gekennzeichnet, daß man Soyalecithin oder sein ethanolisches Extrakt in Ethanol mit Natriummethylat oder -ethylat behandelt, und daß man nach Filtration und Ansäuerung das Gemisch der deacylierten Phospholipide gemäß den Schritten b), c) und d) des Anspruchs 1 behandelt.

4. Verfahren nach einem der vorhergehenden Ansprüche, dadurch gekennzeichnet, daß man als Ausgangsmaterial rohes Soyalecithin verwendet.

5. Verfahren nach einem der vorhergehenden Ansprüche, dadurch gekennzeichnet, daß man als Ausgangsmaterial rohes Eilecithin verwendet.

6. Verfahren zur Reinigung und Abtrennung des (n GPC+m GPE)-Gemisches nach Anspruch 1, Schritt d), dadurch gekennzeichnet, daß man reines GPC erhält durch Eluieren des Gemisches auf einem stark basischen Ionenaustauscherharz.

7. Verfahren zur Herstellung von L-α-Glycerylphosphorylethanolamin, dadurch gekennzeichnet, daß man reines GPE aus dem GPC+GPE-Gemisch nach Abtrennen von GPC gemäß Anspruch 6 durch Eluierung mit einer verdünnten wässrigen Essigsäurelösung abtrennt.

8. Verfahren nach Anspruch 6 oder 7, dadurch gekennzeichnet, daß man als Ausgangsmaterial rohes Eilecithin verwendet.

9. Verfahren zum Aufbrechen eines (n GPC+m GPE)ZnX_2 Komplexes, dadurch gekennzeichnet, daß man organische Basen wie Pyridin, Collidin, Lutidin oder Picolin verwendet.

## Revendications

1. Un procédé de préparation de la L-α-glycérylphosphorylcholine (GPC) et de la L-α-glycérylphosphoryléthanolamine (GPE) comprenant:

a) la désacylation de la lécithine de soja ou d'oeufs brute ou désoléatée, dans du méthanol ou de l'éthanol, avec un alcoolate de métal alcalin;

b) la complexation d'un mélange de L-α-glycérylphosphorylcholine et de L-α-glycérylphosphoryléthanolamine avec un halogénure de zinc pour produire des complexes ayant approximativement la formule I, insolubles dans les alcools inférieurs en $C_1$—$C_4$,

$$(n\ GPC + m\ GPE)ZnX_2 \qquad (I)$$

où

X est Cl ou Br;

n et m valent de 0 à 1

et m+n est égal à 1;

c) la libération du sel $ZnX_2$ du complexe I par traitement d'une solution aqueuse de I par une base (B) choisie dans le groupe comprenant la pyridine, la collidine, la lutidine ou la picoline, de façon à précipiter un complexe $(ZnX_2)B_2$ insoluble et à obtenir une solution de (n GPC+m GPE);

d) la purification et la séparation du mélange de glycérylphosphorylcholine et de glycérylphosphoryléthanolamine au moyen de résines échangeuses d'ions.

2. Un procédé selon la revendication 1, caractérisé en ce qu'on utilise des solutions méthanoliques ou éthanoliques de $ZnCl_2$ comme agents complexants et en ce qu'on libère ensuite le sel par traitement de solutions aqueuses du complexe de formule I par de la pyridine.

3. Un procédé de préparation de la L-α-glycérylphosphorylcholine et de la L-α-glycérylphosphoryléthanolamine à partir de la lécithine de soja désoléatée, caractérisé en ce que la lécithine de soja ou son extrait éthanolique est traité dans de l'éthanol par du méthylate ou de l'éthylate de sodium et en ce que, après filtration et acidification, le mélange de phospholipides désacylés est traité selon les étapes b), c) et d) de la revendication 1.

4. Un procédé selon l'une quelconque des revendications précédentes, caractérisé en ce qu'on utilise de la lécithine de soja brute comme matière de départ.

5. Un procédé selon l'une quelconque des revendications précédentes, caractérisé en ce qu'on utilise de la lécithine d'oeufs brute comme matière de départ.

6. Un procédé pour la purification et la séparation du mélange (n GPC+m GPE), selon la revendication 1, étape d), caractérisé en ce qu'on obtient de la GPC pure en éluant le mélange sur une résine échangeuse d'ions fortement basique.

7. Un procédé de préparation de la L-α-glycéryl-phosphoryléthanolamine, caractérisé en ce qu'on récupère de la GPE pure à partir du mélange GPC+GPE après séparation de la GPC selon la revendication 6, par élution avec une solution aqueuse diluée d'acide acétique.

8. Un procédé selon la revendication 6 ou 7, caractérisé en ce qu'on utilise de la lécithine d'oeufs brute comme matière de départ.

9. Un procédé pour le clivage d'un complexe (n GPC+m GPC)ZnX$_2$, caractérisé en ce qu'on utilise des bases organiques telles que la pyridine, la collidine, la lutidine ou la picoline.